# EUROPÄISCHE PATENTSCHRIFT

(11) **EP 3 516 029 B1**
(45) Veröffentlichungstag und Bekanntmachung des Hinweises auf die Patenterteilung: **07.06.2023**
(21) Anmeldenummer: 17783408.2
(22) Anmeldetag: 22.09.2017
(51) Int. Cl.: C11D 3/04, C11D 3/12, C11D 3/50

(54) **DUFTPASTILLEN AUS FESTSTOFFHALTIGEN SCHMELZDISPERSIONEN**
FRAGRANCE PELLETS COMPOSED OF SOLIDS-CONTAINING MELT DISPERSIONS
PASTILLES PARFUMÉES EN DISPERSIONS DE MASSE FONDUE CONTENANT DES SOLIDES

(30) Priorität: 26.09.2016 DE 102016218480; 26.09.2016 DE 102016218482; 26.09.2016 DE 102016218481; 05.10.2016 DE 102016219296; 05.10.2016 DE 102016219290; 05.10.2016 DE 102016219293; 05.10.2016 DE 102016219292; 07.10.2016 DE 102016219570; 03.03.2017 DE 102017203494; 03.03.2017 DE 102017203501; 03.03.2017 DE 102017203500; 03.03.2017 DE 102017203502; 03.03.2017 DE 102017203505; 28.07.2017 DE 102017007096
(43) Veröffentlichungstag der Anmeldung: 31.07.2019
(73) Patentinhaber: Henkel AG & Co. KGaA, 40589 Düsseldorf (DE)
(72) Erfinder: HOLDERBAUM, Thomas, 40723 Hilden (DE); SCHMIEDEL, PETER, 40591 Düsseldorf (DE); DREJA, MICHAEL, 41469 Neuss (DE); STEHR, REGINA, 41468 Neuss (DE); YAPICI, FILIZ, 40231 Düsseldorf (DE); NICKEL, DIETER, 50259 Puhlheim (DE); LUNEAU, BENOIT, 40885 Ratingen (DE); PANZICA, DANILO, 40721 Hilden (DE); SUBINYA, MIRELA, 74252 Massenbachhausen (DE); RICHTER, BERND, 58644 Iserlohn (DE); LARSON, BERND, 41812 Erkelenz (DE); HORN, MICHAEL, 40470 Düsseldorf (DE); VICTOR, PETER, 41470 Neuss (DE); SCHMIDT, HANS-JOACHIM, 44141 Dortmund (DE); TREBBE, UWE, 40219 Düsseldorf (DE)
(74) Vertreter: dompatent von Kreisler Selting Werner - Partnerschaft von Patent- und Rechtsanwälten mbB
(86) Internationale Anmeldenummer: PCT/EP2017/074107
(87) Internationale Veröffentlichungsnummer: WO 2018/055119

(56) Entgegenhaltungen:
- WO-A1-92/02605
- DE-A1-102006 034 051
- DE-A1-102009 029 292
- US-B1- 9 347 022

## Beschreibung

Die vorliegende Erfindung betrifft eine feste, partikuläre Zusammensetzung umfassend mindestens ein wasserlösliches Trägerpolymer, mindestens einen Duftstoff und mindestens einen Feststoff, wobei das Verhältnis von mittlerer Partikelgröße des Feststoffs und Einsatzkonzentration in dem hierin angegebenen Bereich liegen. Des Weiteren betrifft die Erfindung ein Wasch- oder Reinigungsmittel, das die feste Zusammensetzung enthält. Darüber hinaus betrifft die vorliegende Erfindung auch die Verwendung eines solchen Wasch- oder Reinigungsmittels zum Reinigen von Textilien oder harten Oberflächen sowie entsprechende Verfahren zum Reinigen von Textilien oder harten Oberflächen unter Verwendung eines solchen Wasch- oder Reinigungsmittels.

Bei der Anwendung von Wasch- und Reinigungsmitteln verfolgt der Verbraucher nicht nur das Ziel, die zu behandelnden Objekte zu waschen, zu reinigen oder zu pflegen, sondern er wünscht sich auch, dass die behandelten Objekte, wie z.B. Textilien, nach der Behandlung, beispielsweise nach der Wäsche, angenehm riechen. Insbesondere aus diesem Grunde enthalten die meisten kommerziell verfügbaren Wasch- und Reinigungsmittel Duftstoffe.

Die meisten der Duftstoffe sind jedoch leichtflüchtig. Aus diesem Grund verbleibt beim Einsatz herkömmlicher Wasch- oder Reinigungsmittel nach der Anwendung, insbesondere nach dem Waschen, nur ein geringer Anteil des eingesetzten Duftstoffes auf dem behandelten Objekt. Dadurch geht oft nur ein schwacher Duft von dem behandelten Objekt, wie insbesondere der Wäsche, aus, welcher dann bereits nach kurzer Zeit immer schwächer wird. So verschwindet das angenehme Frischegefühl des behandelten Objekts schon nach kurzer Zeit.

Oftmals werden Duftstoffe in Form von Duftstoffpartikeln entweder als integraler Bestandteil eines Wasch- oder Reinigungsmittels verwendet, oder aber direkt zu Beginn eines Waschgangs in separater Form in die Waschtrommel dosiert. Auf diese Weise kann der Verbraucher durch individuelle Dosierung die Beduftung der zu waschenden Wäsche kontrollieren.

DE 10 2009 029292 beschreibt eine feste, Duft-vermittelnde Zusammensetzung, umfassend einen wasserlöslichen Träger, ein wasserlösliches Polymer, eine Schlechtgeruch-absorbierende Verbindung und ein Parfüm, wobei der wasserlösliche Träger in partikulärer Form vorliegt und zumindest teilweise eine Umhüllung aus dem wasserlöslichen Polymer, der Schlechtgeruch-absorbierende Verbindung und dem Parfüm aufweist.

US 9 347 022 offenbart eine Zusammensetzung zum Beduften von Wäsche, die eine Vielzahl von Teilchen umfasst, wobei die Teilchen umfassen: zu 40 bis 95 Gew.-% Polyethylenglykol, wobei das Polyethylenglykol ein gewichtsmittleres Molekulargewicht von 5000 bis 11000 aufweist; zu 0,1 bis 20 Gew.-% Duftstoff; und zu 0,1 bis 50 Gew.-% Stärkegranalien, wobei die Stärkegranalien ein Dextroseäquivalent von 0 bis 40 Gew.-% aufweisen, wobei die Stärkegranalien eine Korngröße von 1 µm bis 500 µm aufweisen und wobei die Stärkegranalien einen Stärke-Duftstoffbeladungsgrad des Duftstoffs auf den Stärkegranalien von 0 bis 10 Gew.-% der Stärkegranalien aufweisen, wobei die Teilchen homogen strukturierte Teilchen sind, wobei ein homogen strukturiertes Teilchen ein Teilchen ist, in dem die Bestandsmaterialien, die das Teilchen bilden, homogen miteinander vermischt sind, und wobei jedes der Teilchen eine Masse zwischen 0,95 mg und 5 g aufweist.

DE 10 2006 034051 betrifft ein Verfahren zur Herstellung einer festen, Textil-weichmachenden Zusammensetzung, umfassend eine Matrix aus einer Verbindung, die eine Schmelz- oder Erweichungstemperatur im Bereich von 45 bis 300 °C aufweist, sowie darin verteilt eine Textilaffine Verbindung und ein Parfüm, bei dem die Textil-weichmachende Zusammensetzung zunächst in einem fließfähigen oder gießfähigen Zustand erzeugt und anschließend auf einer glatten Oberfläche erstarren gelassen wird.

Derartige Duftpastillen werden üblicherweise aus Schmelzdispersionen hergestellt, deren Hauptbestandteil ein wasserlösliches oder wasserdispergierbares Trägerpolymer mit einer angemessenen Schmelztemperatur ist. Neben den ebenfalls enthaltenden Duftkomponenten und gegebenenfalls sonstigen Hilfsstoffen, wie waschaktiven Substanzen, können solchen Schmelzdispersionen auch Feststoffe zugesetzt werden, um beispielsweise die Viskosität der zu verarbeitenden Dispersion zu beeinflussen. Im Produktionsprozess können jedoch Betriebsstörungen, Ausfallzeiten und Rezepturverfälschungen auftreten, wenn die enthaltenen Feststoffe nicht sedimentationsstabil eingearbeitet werden können und sich unerwünschter Weise in den Produktionsanlagen anlagern.

Es besteht somit weiterhin ein Bedürfnis nach feststoffhaltigen Schmelzdispersionen, die sedimentationsstabil sind und sich insbesondere für die Herstellung von Duftpastillen eignen.

Diese Aufgabe wurden erfindungsgemäß durch eine feste, partikuläre Zusammensetzung gelöst, die neben einem Trägerpolymer einen oder mehrere Duftstoffe und/oder ein Duftstoffkapselgranulat umfasst und deren Feststoffgehalt so gewählt ist, dass die zur Herstellung besagter Zusammensetzung verwendete feststoffhaltige Schmelzdispersion sedimentationsstabil ist.

In einem ersten Aspekt richtet sich die vorliegende Erfindung daher auf eine feste, partikuläre Zusammensetzung umfassend
(a) mindestens ein wasserlösliches Trägerpolymer ausgewählt aus Polyethylenglykolen, in einer Menge von 30 bis 95 Gew.-%, wobei das Polyethylenglykol ein mittleres Molekulargewicht von 4.000 bis 12.000 und einen Schmelzpunkt im Bereich von 50 bis 65 °C aufweist;
(b) mindestens einen Duftstoff in Form von Duftstoffkapseln, und
(c) mindestens einen Feststoff ausgewählt aus Kieselsäuren mit einem d50-Wert im Bereich von 2 bis 500 µm,
wobei der mindestens eine Feststoff in einer Menge eingesetzt wird, dass das Verhältnis des d50-Wertes der Feststoffpartikel in µm zu dem Wert der Einsatzkonzentration in Gew.-%, bezogen auf das Gesamtgewicht der Zusammensetzung, im Bereich von 5 bis 30 liegt.

In einem weiteren Aspekt richtet sich die vorliegende Erfindung auf die Verwendung der festen Zusammensetzung, wie hierin beschrieben, als Textilpflegemittel, vorzugsweise Beduftungsmittel und/oder Weichspüler, zum Beduften und/oder Konditionieren von textilen Flächengebilden.

In noch einem Aspekt richtet sich die vorliegende Erfindung weiterhin auf ein Wasch- oder Reinigungsmittel, umfassend eine feste Zusammensetzung, wie hierin beschrieben.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist.

Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

"Mindestens ein", wie hierin verwendet, bezieht sich auf 1 oder mehr, beispielsweise 1, 2, 3, 4, 5, 6, 7, 8, 9 oder mehr. Insbesondere bezieht sich diese Angabe auf die Art des Mittels/der Verbindung und nicht die absolute Zahl der Moleküle. "Mindestens ein Duftstoff", bedeutet daher, dass mindestens eine Art von Duftstoff erfasst wird, aber auch 2 oder mehr verschiedene Arten von Duftstoffen enthalten sein können.

Wie überraschend festgestellt wurde, besteht hinsichtlich der Sedimentationsstabilität eines eingesetzten Feststoffes in einer Schmelzdispersion basierend auf Trägerpolymeren wie Polyethylenglykolen, eine Korrelation zwischen der Partikelgröße des jeweiligen Feststoffes und seiner Einsatzkonzentration. Ausgehend von diesen Befunden lässt sich für das Verhältnis des d50-Wertes der Feststoffpartikel (in µm) und der Einsatzkonzentration (in Gew.-%) des jeweiligen Feststoffes in der Zusammensetzung ein Bereich festlegen, innerhalb dessen eine gute Sedimentationsstabilität erzielt werden kann.

Eine gute Sedimentationsstabilität eines in einer Schmelzdispersion enthaltenen Feststoffes gewährleistet eine effiziente, ökonomische Verarbeitung, da Sedimentbildungen in einer zu verarbeitenden Schmelze zu Betriebsstörungen, Ausfallzeiten sowie Rezepturverfälschungen führen können.

Ein erster Gegenstand der vorliegenden Erfindung ist daher eine feste, partikuläre Zusammensetzung umfassend
(a) mindestens ein wasserlösliches Trägerpolymer ausgewählt aus Polyethylenglykolen, in einer Menge von 30 bis 95 Gew.-%, wobei das Polyethylenglykol ein mittleres Molekulargewicht von 4.000 bis 12.000 und einen Schmelzpunkt im Bereich von 50 bis 65 °C aufweist;
(b) mindestens einen Duftstoff in Form von Duftstoffkapseln, und
(c) mindestens einen Feststoff ausgewählt aus Kieselsäuren mit einem d50-Wert im Bereich von 2 bis 500 µm,
wobei der mindestens eine Feststoff in einer Menge eingesetzt wird, dass das Verhältnis des d50-Wertes der Feststoffpartikel in µm zu dem Wert der Einsatzkonzentration in Gew.-%, bezogen auf das Gesamtgewicht der Zusammensetzung, im Bereich von 5 bis 30 liegt.

Die Partikelgröße eines Feststoffes kann über verschiedene Werte angegeben werden. So gibt die mittlere Partikelgröße (d50) den Wert an, für den 50 % der Partikel größer bzw. kleiner als der Wert d50 sind. Weiterhin bezeichnen die Werte d90 bzw. d10 einen Wert, für den 90 % bzw. 10 % kleiner als der jeweilige Wert sind.

Gemäß der vorliegenden Erfindung können in Bezug auf die Sedimentationsstabilität eines Feststoffes, der in eine Polyalkylen-basierte Schmelzdispersion mit Schmelztemperaturen von >30°C, insbesondere >40°C, eingearbeitet werden soll, gute Ergebnisse erzielt werden, wenn das Verhältnis des d50-Wertes in µm der Feststoffpartikel zu dem Wert der jeweiligen Einsatzkonzentration in Gew.-% im Bereich von 5 bis 30 liegt. In verschiedenen Ausführungsformen liegt das Verhältnis des d50-Wertes in µm zu dem Wert der Einsatzkonzentration in Gew.-% innerhalb des Bereichs von 8 bis 27, vorzugsweise im Bereich von 10 bis 25, insbesondere im Bereich von 11 bis 20, beispielsweise 11 oder 12.

Der mindestens eine Feststoff ist ausgewählt Kieselsäuren, wie pyrogener Kieselsäure oder Fällungskieselsäure. Die eingesetzten Feststoffe weisen vorzugsweise Schmelztemperaturen auf, die über den im Herstellungsverfahren eingesetzten Temperaturen, d.h. den Temperaturen der Schmelze bzw. der Schmelztemperatur des Trägerpolymers, liegen, so dass sie während der Herstellung in fester Form vorliegen. Ganz besonders bevorzugt handelt es sich bei dem mindestens einen anorganischen Feststoff um pyrogene Kieselsäure und/oder Fällungskieselsäure. In einigen Ausführungsformen handelt es sich bei dem mindestens einen anorganischen Feststoff um pyrogene Kieselsäure. In weiteren Ausführungsformen handelt es sich bei dem mindestens einen anorganischen Feststoff um Fällungskieselsäure. In bestimmten Ausführungsformen handelt es sich bei dem mindestens einen anorganischen Feststoff um pyrogene Kieselsäure und es liegt ein zweiter anorganischer Feststoff vor, bei dem es sich um Fällungskieselsäure handelt.

Bevorzugte d50-Werte liegen im Bereich von mindestens 2, vorzugsweise mindestens 5, noch bevorzugter mindestens 10 µm und reichen bis 500 µm, vorzugsweise bis 400 µm, noch bevorzugter bis 200 µm.

Typische Einsatzkonzentrationen des mindestens einen Feststoffes liegen bei 0,1 bis 50 Gew.-%, vorzugsweise 0,2 bis 40 Gew.-%, insbesondere 0,3 bis 25 Gew.-%, bezogen auf das Gesamtgewicht der festen, partikulären Zusammensetzung. Eine gemäß der vorliegenden Erfindung geeignete Einsatzkonzentration ergibt sich dann jeweils anhand der Partikelgröße des jeweiligen Feststoffes, wie oben dargelegt. Bei einem d50-Wert von 10 µm liegt die Einsatzkonzentration daher im Bereich von 0,33 bis 2 Gew.-%, bei 20 µm im Bereich von 0,67 bis 4 Gew.-%, bei 50 µm im Bereich von 1,67 bis 10 Gew.-%, bei 100 µm im Bereich von 3,3 bis 20 Gew.-% und bei 200 µm im Bereich von 6,7 bis 40 Gew.-%.

In bestimmten Ausführungsformen kann es von Vorteil für die Stabilität sein, wenn die Einsatzkonzentration der Gesamtmenge an Feststoffen mit einem d50-Wert im Bereich von 2 bis 500 µm höchstens 30,0 Gew.-%, vorzugsweise höchstens 20,0 Gew.-%, noch mehr bevorzugt höchstens 18,0 Gew.-%, am meisten bevorzugt höchstens 16,0 Gew.-%, bezogen auf das Gesamtgewicht der festen, partikulären Zusammensetzung, beträgt.

Bei der Hauptkomponente der wie hierin beschrieben partikulären, festen Zusammensetzung handelt es sich um mindestens ein wasserlösliches oder wasserdispergierbares Trägerpolymer.

"Wasserlöslich", wie hierin verwendet, bedeutet eine Löslichkeit in Wasser bei 20°C von mindestens 1 g/L, vorzugsweise mindestens 10 g/L, noch bevorzugter mindestens 50 g/L. "Wasserdispergierbar", wie hierin verwendet, bedeutet, dass sich das Trägerpolymer mit bekannten Verfahren in Wasser bei einer Temperatur von 20°C dispergieren lässt.

Das mindestens eine Trägerpolymer ist ausgewählt aus Polyethylenglykol.

Wenn im Rahmen dieser Anmeldung von "mittlerem Molekulargewicht von Polyethylenglykolen" gesprochen wird, so beziehen sich diese Angaben jeweils auf die gewichtsmittleren Molekulargewichte (Mn), die sich rechnerisch aus der OH-Zahl gemessen gemäß DIN 53240-1 (beispielsweise Version 2013) ergeben.

Bei dem mindestens einen Trägerpolymer handelt es sich um ein Polyethylenglykol mit einem mittleren Molekulargewicht zwischen 4.000 und 13.000, weiter bevorzugt ein mittleres Molekulargewicht zwischen 4000 und 6000, 6000 und 8000 oder 9.000 und 12.000 und insbesondere bevorzugt von etwa 4000 oder etwa 6000 g/mol aufweisen. Ein solches Polyethylenglykol zeichnet sich durch einen Schmelzpunkt im Bereich von 50 bis 65°C aus, noch bevorzugter 50 bis 60°C. "Etwa" oder "ungefähr", wie hierin im Zusammenhang mit einem Zahlenwert verwendet, bedeutet den Zahlenwert ±10%, vorzugsweise ±5%. Ein Molekulargewicht von etwa 6000 g/mol bedeutet somit 5400-6600 g/mol, vorzugsweise 5700-6300 g/mol.

Das mindestens eine Trägerpolymer wird in einer Menge eingesetzt, dass der resultierende Schmelzkörper, d.h. die Duftpastille, von 30 bis 95 Gew.-%, vorzugsweise von 35 bis 85 Gew.-%, beispielsweise 40 bis 80 oder 40 bis 78 Gew.-%, basierend auf dem Gesamtgewicht des Schmelzkörpers, des Trägerpolymers enthält.

Eine weitere Komponente der wie hierin beschriebenen, partikulären festen Zusammensetzung ist mindestens ein Duftstoff. Bei einem Duftstoff handelt es sich um eine den Geruchsinn anregende, chemische Substanz. Um den Geruchssinn anregen zu können, sollte die chemische Substanz zumindest teilweise in der Luft verteilbar sein, d.h. der Duftstoff sollte bei 25°C zumindest in geringem Maße flüchtig sein. Ist der Duftstoff nun sehr flüchtig, klingt die Geruchsintensität dann schnell wieder ab. Bei einer geringeren Flüchtigkeit ist der Gerucheindruck jedoch nachhaltiger, d.h. er verschwindet nicht so schnell. In einer Ausführungsform weist der Duftstoff daher einen Schmelzpunkt auf, der im Bereich von -100°C bis 100°C, bevorzugt von -80°C bis 80°C, noch bevorzugter von -20°C bis 50°C, insbesondere von -30°C bis 20°C liegt. In einer weiteren Ausführungsform weist der Duftstoff einen Siedepunkt auf, der im Bereich von 25°C bis 400°C, bevorzugt von 50°C bis 380°C, mehr bevorzugt von 75°C bis 350°C, insbesondere von 100°C bis 330°C liegt.

Insgesamt sollte eine chemische Substanz eine bestimmte Molekülmasse nicht überschreiten, um als Duftstoff zu fungieren, da bei zu hoher Molekülmasse die erforderliche Flüchtigkeit nicht mehr gewährleitstet werden kann. In einer Ausführungsform weist der Duftstoff eine Molekülmasse von 40 bis 700 g/mol, noch bevorzugter von 60 bis 400 g/mol auf.

Der Geruch eines Duftstoffes wird von den meisten Menschen als angenehm empfunden und entspricht häufig dem Geruch nach beispielsweise Blüten, Früchten, Gewürzen, Rinde, Harz, Blättern, Gräsern, Moosen und Wurzeln. So können Duftstoffe auch dazu verwendet werden, um unangenehme Gerüche zu überlagern oder aber auch um einen nicht riechenden Stoff mit einem gewünschten Geruch zu versehen. Als Duftstoffe können einzelne Riechstoffverbindungen, z.B. die synthetischen Produkte vom Typ der Ester, Ether, Aldehyde, Ketone, Alkohole und Kohlenwasserstoffe verwendet werden.

Duftstoffverbindungen vom Typ der Aldehyde sind beispielsweise Adoxal (2,6,10-Trimethyl-9-undecenal), Anisaldehyd (4-Methoxybenzaldehyd), Cymal (3-(4-Isopropyl-phenyl)-2-methylpropanal), Ethylvanillin, Florhydral (3-(3-isopropylphenyl)butanal), Helional (3-(3,4-Methylendioxyphenyl)-2-methylpropanal), Heliotropin, Hydroxycitronellal, Lauraldehyd, Lyral (3- und 4-(4-Hydroxy-4-methylpentyl)-3- cyclohexen-1-carboxaldehyd), Methylnonylacetaldehyd, Lilial (3-(4-tert-Butylphenyl)-2-methylpropanal), Phenylacetaldehyd, Undecylenaldehyd, Vanillin, 2,6,10-Trimethyl-9-undecenal, 3-Dodecen-1-al, alpha-n-Amylzimtaldehyd, Melonal (2,6-Dimethyl-5-heptenal), 2,4-Di-methyl-3-cyclohexen-1-carboxaldehyd (Triplal), 4-Methoxybenzaldehyd, Benzaldehyd, 3-(4-tert- Butylphenyl)-propanal, 2-Methyl-3-(para-methoxyphenyl)propanal, 2-Methyl-4-(2,6,6-timethyl-2(1)-cyclohexen-1-yl)butanal, 3-Phenyl-2-propenal, cis-/trans-3,7-Dimethyl-2,6-octadien-1-al, 3,7-Dimethyl-6-octen-1-al, [(3,7-Dimethyl-6-octenyl)oxy]acetaldehyd, 4-Isopropylbenzylaldehyd, 1,2,3,4,5,6,7,8-Octahydro-8,8-dimethyl-2-naphthaldehyd, 2,4-Dimethyl-3-cyclohexen-1-carboxaldehyd, 2-Methyl-3-(isopropylphenyl)propanal, 1-Decanal, 2,6-Dimethyl-5-heptenal, 4-(Tricyclo[5.2.1.0(2,6)]-decyliden-8)-butanal, Octahydro-4,7-methan-1H-indencarboxaldehyd, 3-Ethoxy-4-hydroxybenzaldehyd, para-Ethyl-alpha,alpha-dimethylhydrozimtaldehyd, alpha-Methyl-3,4-(methylendioxy)-hydrozimtaldehyd, 3,4-Methylendioxybenzaldehyd, alpha-n-Hexylzimtaldehyd, m-Cymen-7-carboxaldehyd, alpha-Methylphenylacetaldehyd, 7-Hydroxy-3,7-dimethyloctanal, Undecenal, 2,4,6-Trimethyl-3-cyclohexen-1-carboxaldehyd, 4-(3)(4-Methyl-3-pentenyl)-3-cyclohexencarboxaldehyd, 1-Dodecanal, 2,4-Dimethylcyclohexen-3-carboxaldehyd, 4-(4-Hydroxy-4-methylpentyl)-3-cylohexen-1-carboxaldehyd, 7-Methoxy-3,7-dimethyloctan-1-al, 2-Methyl- undecanal, 2-Methyldecanal, 1-Nonanal, 1-Octanal, 2,6,10-Trimethyl-5,9-undecadienal, 2-Methyl-3-(4-tert-butyl)propanal, Dihydrozimtaldehyd, 1-Methyl-4-(4-methyl-3-pentenyl)-3-cyclohexen-1-carboxaldehyd, 5- oder 6-Methoxyhexahydro-4,7-methanindan-1- oder-2-carboxaldehyd, 3,7-Dimethyloctan-1-al, 1-Undecanal, 10-Undecen-1-al, 4-Hydroxy-3-methoxybenzaldehyd, 1-Methyl-3-(4-methylpentyl)-3-cyclohexencarboxaldehyd, 7-Hydroxy-3J-dimethyl-octanal, trans-4-Decenal, 2,6-Nonadienal, para-Tolylacetaldehyd, 4-Methylphenylacetaldehyd, 2-Methyl-4-(2,6,6-trimethyl-1-cyclohexen-1-yl)-2-butenal, ortho-Methoxyzimtaldehyd, 3,5,6-Trimethyl-3-cyclohexen- carboxaldehyd, 3J-Dimethyl-2-methylen-6-octenal, Phenoxyacetaldehyd, 5,9-Dimethyl-4,8- decadienal, Päonienaldehyd (6,10-Dimethyl-3-oxa-5,9-undecadien-1-al), Hexahydro-4,7-methanindan-1-carboxaldehyd, 2-Methyloctanal, alpha-Methyl-4-(1-methylethyl)benzolacetaldehyd, 6,6-Dimethyl-2-norpinen-2-propionaldehyd, para-Methylphenoxyacetaldehyd, 2-Methyl-3-phenyl-2-propen-1-al, 3,5,5-Trimethylhexanal, Hexahydro-8,8-dimethyl-2-naphthaldehyd, 3-Propyl-bicyclo-[2.2.1]-hept-5-en-2-carbaldehyd, 9-Decenal, 3-Methyl-5-phenyl-1-pentanal, Methylnonylacetaldehyd, Hexanal und trans-2-Hexenal.

Duftstoffverbindungen vom Typ der Ketone sind beispielsweise Methyl-beta-naphthylketon, Moschusindanon (1,2,3,5,6,7-Hexahydro-1,1,2,3,3- pentamethyl-4H-inden-4-on), Tonalid (6-Acetyl-1,1,2,4,4,7-hexamethyltetralin), alpha-Damascon, beta-Damascon, delta-Damascon, iso-Damascon, Damascenon, Methyldihydrojasmonat, Menthon, Carvon, Kampfer, Koavon (3,4,5,6,6-Pentamethylhept-3-en-2-on), Fenchon, alpha-lonon, beta- lonon, gamma-Methyl-lonon, Fleuramon (2-heptylcyclopen-tanon), Dihydrojasmon, cis-Jasmon, iso-E-Super (1-(1,2,3,4,5,6J,8-octahydro-2,3,8,8-tetramethyl-2-naphthalenyl)-ethan-1-on (und Isomere)), Methylcedrenylketon, Acetophenon, Methylacetophenon, para-Methoxyacetophenon, Methyl-beta-naphtylketon, Benzylaceton, Benzophenon, para-Hydroxyphenylbutanon, Sellerie- Keton(3-methyl-5-propyl-2-cyclohexenon), 6-Isopropyldecahydro-2-naphton, Dimethyloctenon, Frescomenthe (2-butan-2-yl-cyclohexan-1-on), 4-(1-Ethoxyvinyl)-3,3,5,5-tetramethylcyclohexanon, Methylheptenon, 2-(2-(4-Methyl-3-cyclohexen-1-yl)propyl)cyclopentanon, 1-(p-Menthen-6(2)yl)-1-propanon, 4-(4-Hydroxy-3-methoxyphenyl)-2-butanon, 2-Acetyl-3,3-dimethylnorbornan, 6,7- Dihydro-1,1,2,3,3-pentamethyl-4(5H)-indanon, 4-Damascol, Dulcinyl(4-(1,3-benzodioxol-5-yl) butan-2-on), Hexalon (1-(2,6,6-trimethyl-2-cyclohexene-1-yl)-1,6-heptadien-3-on), IsocyclemonE(2-acetonaphthon-1,2,3,4,5,6,7,8-octahydro-2,3,8,8-tetramethyl), Methylnonylketon, Methylcyclocitron, Methyllavendelketon, Orivon (4-tert-Amyl-cyclohexanon), 4-tert-Butylcyclohexanon, Delphon (2-pentyl-cyclopentanon), Muscon (CAS 541-91-3), Neobutenon (1-(5,5-dimethyl-1- cyclohexenyl)pent-4-en-1-on), Plicaton (CAS 41724-19-0), Velouton (2,2,5-Trimethyl-5- pentylcyclopentan-1-on),2,4,4,7-Tetramethyl-oct-6-en-3-on und Tetrameran (6,10- Dimethylundecen-2-on).

Duftstoffverbindungen vom Typ der Alkohole sind beispielsweise 10-Undecen-1-ol, 2,6-Dimethylheptan-2-ol, 2-Methyl-butanol, 2-Methylpentanol, 2- Phenoxyethanol, 2-Phenylpropanol, 2-tert.-Butycyclohexanol, 3,5,5-Trimethylcyclohexanol, 3-Hexanol, 3-Methyl-5-phenyl-pentanol, 3-Octanol, 3-Phenyl-propanol, 4-Heptenol, 4-Isopropyl- cyclohexanol, 4-tert.-Butycyclohexanol, 6,8-Dimethyl-2-nona-nol, 6-Nonen-1-ol, 9-Decen-1-ol, α-Methylbenzylalkohol, α-Terpineol, Amylsalicylat, Benzylalkohol, Benzylsalicylat, β-Terpineol, Butylsalicylat, Citronellol, Cyclohexylsalicylat, Decanol, Di-hydromyrcenol, Dimethylbenzylcarbinol, Dimethylheptanol, Dimethyloctanol, Ethylsalicylat, Ethylvanilin, Eugenol, Farnesol, Geraniol, Heptanol, Hexylsalicylat, Isoborneol, Isoeugenol, Isopulegol, Linalool, Menthol, Myrtenol, n-Hexanol, Nerol, Nonanol, Octanol, p-Menthan-7-ol, Phenylethylalkohol, Phenol, Phenylsalicylat, Tetrahydrogeraniol, Tetrahydrolinalool, Thymol, trans-2-cis-6-Nonadicnol, trans-2-Nonen-1-ol, trans-2-Octenol, Undecanol, Vanillin, Champiniol, Hexenol und Zimtalkohol.

Duftstoffverbindungen vom Typ der Ester sind z.B. Benzylacetat, Phenoxyethylisobutyrat, p-tert-Butylcyclohexylacetat, Linalylacetat, Dimethylbenzylcarbinylacetat (DMBCA), Phenylethylacetat, Benzylacetat, Ethylmethylphenyl- glycinat, Allylcyclohexylpropionat, Styrallylpropionat, Benzylsalicylat, Cyclohexylsalicylat, Floramat, Melusat und Jasmacyclat.

Zu den Ethern zählen beispielsweise Benzylethylether und Ambroxan. Zu den Kohlenwasserstoffen gehören hauptsächlich Terpene wie Limonen und Pinen.

Bevorzugt werden Mischungen verschiedener Duftstoffe verwendet, die gemeinsam eine ansprechende Duftnote erzeugen. Ein derartiges Gemisch an Duftstoffen kann auch als Parfüm oder Parfümöl bezeichnet werden. Solche Parfümöle können auch natürliche Duftstoffgemische enthalten, wie sie aus pflanzlichen Quellen zugänglich sind.

Zu den Duftstoffen pflanzlichen Ursprungs zählen ätherische Öle wie Angelikawurzelöl, Anisöl, Arnikablütenöl, Basilikumöl, Bayöl, Champacablütenöl, Citrusöl, Edeltannenöl, Edeltannenzapfenöl, Elemiöl, Eukalyptusöl, Fenchelöl, Fichtennadelöl, Galbanumöl, Geraniumöl, Gingergrasöl, Guajakholzöl, Gurjunbalsamöl, Helichrysumöl, Ho-Öl, Ingweröl, Irisöl, jasminöl, Kajeputöl, Kalmusöl, Kamillenöl, Kampferöl, Kanagaöl, Kardamomenöl, Kassiaöl, Kiefernnadelöl, Kopaivabalsamöl, Korianderöl, Krauseminzeöl, Kümmelöl, Kuminöl, Labdanumöl, Lavendelöl, Lemongrasöl, Lindenblütenöl, Limettenöl, Mandarinenöl, Melissenöl, Minzöl, Moschuskörneröl, Muskatelleröl, Myrrhenöl, Nelkenöl, Neroliöl, Niaouliöl, Olibanumöl, Orangenblütenöl, Orangenschalenöl, Origanumöl, Palmarosaöl, Patschuliöl, Perubalsamöl, Petitgrainöl, Pfefferöl, Pfefferminzöl, Pimentöl, Pine-Öl, Rosenöl, Rosmarinöl, Salbeiöl, Sandelholzöl, Sellerieöl, Spiköl, Sternanisöl, Terpentinöl, Thujaöl, Thymianöl, Verbenaöl, Vetiveröl, Wacholderbeeröl, Wermutöl, Wintergrünöl, Ylang-Ylang-Öl, Ysop-Öl, Zimtöl, Zimtblätteröl, Zitronellöl, Zitronenöl sowie Zypressenöl sowie Ambrettolid, Ambroxan, alpha-Amylzimtaldehyd, Anethol, Anisaldehyd, Anisalkohol, Anisol, Anthranilsäuremethylester, Acetophenon, Benzylaceton, Benzaldehyd, Benzoesäureethylester, Benzophenon, Benzylalkohol, Benzylacetat, Benzylbenzoat, Benzylformiat, Benzylvalerianat, Borneol, Bornylacetat, Boisambrene forte, alpha-Bromstyrol, n-Decylaldehyd, n-Dodecylaldehyd, Eugenol, Eugenolmethylether, Eukalyptol, Farnesol, Fenchon, Fenchylacetat, Geranylacetat, Geranylformiat, Heliotropin, Heptincarbonsäuremethylester, Heptaldehyd, Hydrochinon-Dimethylether, Hydroxyzimtaldehyd, Hydroxyzimtalkohol, Indol, Iron, Isoeugenol, Isoeugenolmethylether, Isosafrol, Jasmon, Kampfer, Karvakrol, Karvon, p-Kresolmethylether, Cumarin, p-Methoxyacetophenon, Methyl-n-amylketon, Methylanthranilsäuremethylester, p-Methylacetophenon, Methylchavikol, p-Methylchinolin, Methyl-beta-naphthylketon, Methyl-n-nonylacetaldehyd, Methyl-n-nonylketon, Muskon, beta-Naphtholethylether, beta-Naphthol-methylether, Nerol, n-Nonylaldehyd, Nonylalkohol, n-Octylaldehyd, p-Oxy-Acetophenon, Pentadekanolid, beta-Phenylethylalkohol, Phenylessigsäure, Pulegon, Safrol, Salicylsäureisoamylester, Salicylsäuremethylester, Salicylsäurehexylester, Salicylsäurecyclohexylester, Santalol, Sandelice, Skatol, Terpineol, Thymen, Thymol, Troenan, gamma-Undelacton, Vanillin, Veratrumaldehyd, Zimtaldehyd, Zimtalkohol, Zimtsäure, Zimtsäureethylester, Zimtsäurebenzylester, Diphenyloxid, Limonen, Linalool, Linalylacetat und - Propionat, Melusat, Menthol, Menthon, Methyl-n-heptenon, Pinen, Phenylacetaldehyd, Terpinylacetat, Citral, Citronellal, sowie Mischungen daraus.

Der Duftstoff wird in verkapselter Form (Duftstoffkapseln), insbesondere in Mikrokapseln, eingesetzt wird. Bei den Mikrokapseln kann es sich um wasserlösliche und/oder wasserunlösliche Mikrokapseln handeln. Es können beispielsweise Melamin-Harnstoff-Formaldehyd-Mikrokapseln, Melamin-Formaldehyd-Mikrokapseln, Harnstoff-Formaldehyd-Mikrokapseln oder Stärke-Mikrokapseln eingesetzt werden. "Duftstoffvorläufer" bezieht sich auf Verbindungen, die erst nach chemischer Umwandlung/Spaltung, typischerweise durch Einwirkung von Licht oder anderen Umgebungsbedingungen, wie pH-Wert, Temperatur, etc., den eigentlichen Duftstoff freisetzen. Derartige Verbindungen werden häufig auch als Duftspeicherstoffe oder "Pro-Fragrance" bezeichnet.

Die Menge an Duftstoff in der Zusammensetzung beträgt vorzugsweise zwischen 1 bis 20 Gew.-%, vorzugsweise 1 bis 15 Gew.-%, insbesondere von 3 bis 10 Gew.-%, bezogen auf das Gesamtgewicht der Zusammensetzung.

In verschiedenen Ausführungsformen kann die feste, partikuläre Zusammensetzung, wie hierin beschrieben, ferner mindestens eine Textil-pflegende Verbindung umfassen. Unter einer Textil-pflegenden Verbindung wird in diesem Zusammenhang jede Verbindung verstanden, die damit behandelten textilen Flächengebilden einen vorteilhaften Effekt vermittelt, wie beispielsweise einen Textil-weichmachenden Effekt, Knitterfestigkeit bzw. die schädliche oder negative Effekte, die beim Reinigen und/oder Konditionieren und/oder Tragen auftreten können, wie beispielsweise Verblassen, Vergrauung, usw., reduziert.

Die Textil-pflegende Verbindung kann vorzugsweise aus Textil-weichmachenden Verbindungen, Bleichmitteln, Bleichaktivatoren, Enzymen, Silikonölen, Antiredepositionsmittel, optischen Aufheller, Vergrauungsinhibitoren, Einlaufverhinderer, Knitterschutzmittel, Farbübertragungsinhibitoren, antimikrobiellen Wirkstoffen, Germiziden, Fungiziden, Antioxidantien, Antistatika, Bügelhilfsmitteln, Phobier- und Imprägniermitteln, Quell- und Schiebefestmitteln, UV-Absorber sowie Mischungen daraus ausgewählt werden.

Es ist insbesondere bevorzugt, dass die Textil-pflegende Verbindung eine Textil-weichmachende Verbindung ist. Dabei ist ganz besonders bevorzugt, dass die Textil-weichmachende Verbindung aus Polysiloxanen, Textil-weichmachenden Tonen, kationischen Polymeren und Mischungen daraus ausgewählt ist.

Die Verwendung von Polysiloxanen und/oder kationischen Polymeren als Textil-pflegende Verbindung in der Zusammensetzung ist vorteilhaft, da diese nicht nur einen weichmachenden Effekt zeigen, sondern auch den Parfümeindruck auf der Wäsche verstärken. Die Verwendung von weichmachenden Tonen als Textil-pflegende Verbindung in der Zusammensetzung ist vorteilhaft, da diese zusätzlich einen Wasser-enthärtenden Effekt aufweisen und so beispielsweise Kalkablagerungen auf der Wäsche verhindert werden können. Um eine optimale Leistung zu erzielen, kann es bevorzugt sein, dass eine Zusammensetzung eine Kombination von wenigstens zwei Textil-pflegenden Verbindungen enthält.

Wenn die erfindungsgemäße Zusammensetzung derartige Textil-pflegende Verbindungen enthält, wird sie insbesondere als Textilpflegemittel oder Weichspüler oder als Bestandteil eines solchen Mittels oder auch als Bestandteil eines Waschmittels eingesetzt.

Ein solcher Weichspüler kann im Hauptwaschgang eines automatischen Wasch- oder Reinigungsverfahrens eingesetzt werden. Die Zusammensetzung kann beispielsweise zusammen mit dem Wasch- oder Reinigungsmittel in die Trommel oder die Einspülkammer einer Waschmaschine gegeben werden. Dies hat den Vorteil, dass kein zusätzlicher Spülgang notwendig ist und keine unschönen Ablagerungen in der Einspülkammer auftreten

Weiterhin kann eine solche feste Zusammensetzung im Waschgang eines Wäschereinigungsverfahrens eingesetzt werden und so die Textil-pflegende Verbindung und das Parfüm bereits direkt zu Beginn des Waschverfahrens zur Wäsche transportieren, um so ihr volles Potential entfalten zu können. Weiterhin ist diese feste Zusammensetzung einfacher und besser zu handhaben als flüssige Zusammensetzungen, da keine Tropfen am Flaschenrand zurückbleiben, die bei der anschließenden Lagerung der Flasche zu Rändern auf dem Untergrund oder zu unschönen Ablagerungen im Bereich des Verschlusses führen. Dasselbe gilt für den Fall, dass bei der Dosierung etwas von der Zusammensetzung versehentlich verschüttet wird. Die verschüttete Zusammensetzung kann auch einfacher und sauberer entfernt werden.

Ein bevorzugt einsetzbares Polysiloxan weist zumindest folgende Struktureinheit auf
a) 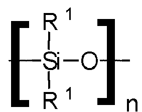
mit
R¹= unabhängig voneinander C₁-C₃₀-Alkyl, vorzugsweise C₁-C₄-Alkyl, insbesondere Methyl oder Ethyl,
n = 1 bis 5000, vorzugsweise 10 bis 2500, insbesondere 100 bis 1500.

Es kann bevorzugt sein, dass das Polysiloxan zusätzlich auch folgende Struktureinheit aufweist:
mit b) 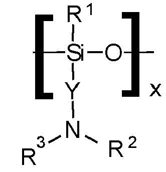
R¹= C₁-C₃₀-Alkyl, vorzugsweise C₁-C₄-Alkyl, insbesondere Methyl oder Ethyl,
Y= ggf. substituiertes, lineares oder verzweigtes C₁-C₂₀-Alkylen, vorzugsweise -(CH₂)ₘ- mit m= 1 bis 16, vorzugsweise 1 bis 8, insbesondere 2 bis 4, im speziellen 3,
R², R³ = unabhängig voneinander H oder gegebenenfalls substituiertes, lineares oder verzweigtes C₁-C₃₀-Alkyl, vorzugsweise mit Aminogruppen substituiertes C₁-C₃₀-Alkyl, besonders bevorzugt -(CH₂)_{b}-NH₂ mit b = 1 bis 10, äußerst bevorzugt b = 2,
x = 1 bis 5000, vorzugsweise 10 bis 2500, insbesondere 100 bis 1500.

Weist das Polysiloxan nur die Struktureinheit a) mit R¹ = Methyl auf, handelt es sich um ein Polydimethylsiloxan. Polydimethylpolysiloxane sind als effiziente Textil-pflegende Verbindungen bekannt.

Geeignete Polydimethysiloxane umfassen DC-200 (ex Dow Corning), Baysilone^{®} M 50, Baysilone^{®} M 100, Baysilone^{®} M 350, Baysilone^{®} M 500, Baysilone^{®} M 1000, Baysilone^{®} M 1500, Baysilone^{®} M 2000 oder Baysilone^{®} M 5000 (alle ex GE Bayer Silicones).

Es kann allerdings auch bevorzugt sein, dass das Polysiloxan die Struktureinheiten a) und b) enthält. Ein besonders bevorzugtes Polysiloxan weist die folgende Struktur auf:

(CH₃)₃Si-[O-Si(CH₃)₂]ₙ-[O-Si(CH₃){(CH₂)₃-NH-(CH₂)₂-NH₂}]ₓ-OSi(CH₃)₃

wobei die Summe n + x eine Zahl zwischen 2 und 10.000 ist.

Geeignete Polysiloxane mit den Struktureinheiten a) und b) sind beispielsweise kommerziell unter den Markennamen DC2-8663, DC2-8035, DC2-8203, DC05-7022 oder DC2-8566 (alle ex Dow Corning) erhältlich. Erfindungsgemäß ebenfalls geeignet sind beispielsweise die im Handel erhältlichen Produkte Dow Corning^{®} 7224, Dow Corning^{®} 929 Cationic Emulsion oder Formasil 410 (GE Silicones).

Ein geeigneter Textil-weichmachender Ton ist beispielsweise ein Smectit-Ton. Bevorzugte Smectit-Tone sind Beidellit-Tone, Hectorit-Tone, Laponit-Tone, Montmorillonit-Tone, Nontronit-Tone, Saponit-Tone, Sauconit-Tone und Mischungen daraus. Montmorillonit-Tone sind die bevorzugten weichmachenden Tone. Bentonite enthalten hauptsächlich Montmorillonite und können als bevorzugte Quelle für den Textil-weichmachenden Ton dienen. Die Bentonite können als Pulver oder Kristalle eingesetzt werden.

Geeignete Bentonite werden beispielsweise unter den Bezeichnungen Laundrosil^{®} von der Firma Süd-Chemie oder unter der Bezeichnung Detercal von der Firma Laviosa vertrieben. Es ist bevorzugt, dass die Textil-pflegende Zusammensetzung einen pulverförmigen Bentonit als Textil-pflegende Verbindung enthält.

Geeignete kationische Polymere umfassen insbesondere solche, die in "CTFA International Cosmetic Ingredient Dictionary", Fourth Edition, J. M. Nikitakis, et al, Editors, veröffentlicht durch die Cosmetic, Toiletry, and Fragrance Association, 1991 beschrieben sind und unter der Sammelbezeichnung "Polyquaternium" zusammengefasst sind. Im Folgenden sind einige geeignete Polyquaternium-Verbindungen genauer aufgeführt.
POLYQUATERNIUM-1 (CAS-Nummer: 68518-54-7)
   Definition: {(HOCH₂CH₂)₃N⁺-CH₂CH=CHCH₂-[N⁺(CH₃)₂-CH₂CH=CHCH₂]ₓ-N⁺(CH₂CH₂OH)₃}[CI⁻]ₓ₊₂
POLYQUATERNIUM-2 (CAS-Nummer: 63451-27-4)
   Definition: [-N(CH₃)₂-CH ₂CH₂CH₂-NH-C(O)-NH-CH₂CH ₂CH₂-N(CH₃)₂-CH₂CH₂OCH₂CH₂-]²⁺ (Cl⁻)₂
POLYQUATERNIUM-3
   Definition: Copolymer von Acrylamid und Trimethylammoniumethylmethacrylatmethosulfat
POLYQUATERNIUM-4 (CAS-Nummer: 92183-41-0)
   Definition: Copolymer von Hydroxyethylcellulose und Diallyldimethylammoniumchlorid Beispielsweise erhältlich als Celquat^{®} H 100 oder Celquat^{®} L200 (ex National Starch)
POLYQUATERNIUM-5 (CAS-Nummer: 26006-22-4)
   Definition: Copolymer von Acrylamid und β-Methacrylyloxyethyltrimethylammoniummethosulfat.
POLYQUATERNIUM-6 (CAS-Nummer: 26062-79-3)
   Definition: Polymer von Dimethyldiallylammoniumchlorid
POLYQUATERNIUM-7 (CAS-Nummer: 26590-05-6)
   Definition: Polymeres quaternäres Ammoniumsalz bestehend aus Acrylamid- und Dimethyldiallylammoniumchlorid-Monomeren.
POLYQUATERNIUM-8
   Definition: Polymeres quaternäres Ammoniumsalz von Methyl- und Stearyldimethylaminoethylmethacrylat, welches mit Dimethylsulfat quaternierte wurde
POLYQUATERNIUM-9
   Definition: Polymeres quaternäres Ammoniumsalz von Polydimethylaminoethylmethacrylat, welches mit Methylbromid quaternierte wurde
POLYQUATERNIUM-11 (CAS-Nummer: 53633-54-8)
   Definition: Quaternäres Ammoniumpolymer, welches durch Umsetzung von Diethylsulfat mit dem Copolymer von Vinylpyrrolidon und Dimethylaminoethylmethacrylat gebildet wird.
POLYQUATERNIUM-12 (CAS-Nummer: 68877-50-9)
   Definition: Quaternäres Ammoniumpolymersalz, welches durch Umsetzung des Ethylmethacrylat/- Abietylmethacrylat/Diethylaminoethylmethacrylat-Copolymers mit Dimethylsulfat erhältlich ist
POLYQUATERNIUM-13 (CAS Nummer: 68877-47-4)
   Definition: Polymeres quaternäres Ammoniumsalz, welches durch Umsetzung des Ethylmethacrylat/Oleylmethacrylat/Diethylaminoethylmethacrylat-Copolymers mit Dimethylsulfat erhältlich ist
POLYQUATERNIUM-14 (CAS-Nummer: 27103-90-8)
   Definition: Polymeres quaternäres Ammoniumsalz der Formel -{-CH₂-C-(CH₃)-[C(O)O-CH₂CH₂-N(CH₃)₃⁻]}ₓ⁺ [CH₃SO₄]⁻ₓ
POLYQUATERNIUM-15 (CAS-Nummer: 35429-19-7)
   Definition: Copolymer von Acrylamid und β-Methacrylyloxyethyltrimethylammoniumchlorid
POLYQUATERNIUM-16 (CAS-Nummer: 95144-24-4)
   Definition: Polymeres quaternäres Ammoniumsalz, gebildet aus Methylvinylimidazoliumchlorid und Vinylpyrrolidon
POLYQUATERNIUM-17 (CAS-Nummer: 90624-75-2)
   Definition: Polymeres quaternäres Ammoniumsalz, welches durch Umsetzung von Adipinsäure und Dimethylaminopropylamin mit Dichlorethylether erhältlich ist.
POLYQUATERNIUM-18
   Definition: Polymeres quaternäres Ammoniumsalz, welches durch Umsetzung von Azelainsäure und Dimethylaminopropylamin mit Dichlorethylether erhältlich ist.
POLYQUATERNIUM-19
   Definition: Polymeres quaternäres Ammoniumsalz, welches durch Umsetzung von Polyvinylalkohol mit 2,3-Epoxypropylamin erhältlich ist.
POLYQUATERNIUM-20
   Definition: Polymeres quaternäres Ammoniumsalz, welches durch Umsetzung von Polyvinyloctadecylether mit 2,3-Epoxypropylamin erhältlich ist.
POLYQUATERNIUM-21 (CAS-Nummer: 102523-94-4)
   Definition: Polysiloxan/Polydimethyldialkylammoniumacetat-Copolymer
POLYQUATERNIUM-22 (CAS-Nummer: 53694-17-0)
   Definition: Dimethyldiallylammoniumchlorid/Acrylsäure-Copolymer
POLYQUATERNIUM-24 (CAS-Nummer: 107987-23-5)
   Definition: Polymeres quaternäres Ammoniumsalz aus der Umsetzung von Hydroxyethylcellulose mit einem mit Lauryldimethylammonium substituierten-Epoxid
POLYQUATERNIUM-27
   Definition: Blockcopolymer aus der Umsetzung von Polyquaternium-2 mit Polyquaternium-17.
POLYQUATERNIUM-28 (CAS-Nummer: 131954-48-8)
   Definition: Vinylpyrrolidon/Methacrylamidopropyltrimethylammoniumchlorid-Copolymer
POLYQUATERNIUM-29
   Definition: Chitosan, welches mit Propylenoxid umgesetzt und mit Epichlorhydrin quaternisiert wurde
POLYQUATERNIUM-30
   Definition: Polymeres quaternäres Ammoniumsalz der Formel: -[CH₂C(CH₃)(C(O)OCH₃)]ₓ-[CH₂C(CH₃)(C(O) OCH₂CH₂N⁺(CH₃)₂CH₂COO⁻)]_{y}-
POLYQUATERNIUM-31 (CAS-Nummer. 136505-02-7)
POLYQUATERNIUM-32 (CAS-Nummer: 35429-19-7)
   Definition: Polymer von N,N,N-Trimethyl-2-[(2-methyl-1-oxo-2-propenyl)oxy]-ethanaminiumchlorid mit 2-Propenamid
POLYQUATERNIUM-37 (CAS-Nummer: 26161-33-1)
   Definition: Homopolymer von Methacryloyltrimethylchlorid
   Beispielsweise erhältlich als Synthalen^{®} CR (ex 3V Sigma)
POLYQUATERNIUM-44 (CAS-Nummer: 150595-70-5)
   Definition: Quaternäres Ammoniumsalz des Copolymers von Vinylpyrrolidon und quaternisiertem Imidazolin
POLYQUATERNIUM-68 (CAS-Nummer: 827346-45-2)
   Definition: Quaternisiertes Copolymer von Vinylpyrrolidon, Methacrylamid, Vinylimidazol und quaternisiertem Vinylimidazol

Es kann bevorzugt sein, dass die Zusammensetzung eine Textil-weichmachende Verbindung und eine oder mehr weitere Textil-pflegende Verbindung(en) enthält.

Die Menge an Textil-pflegender Verbindung in der Zusammensetzung kann, in verschiedenen Ausführungsformen, 0,1 bis 15 Gew.-% und bevorzugt zwischen 2 und 12 Gew.-% betragen.

Die Zusammensetzung kann optional weitere Inhaltsstoffe enthalten. Um die anwendungstechnischen und/oder ästhetischen Eigenschaften der Zusammensetzung unabhängig von ihrem Einsatzzweck zu verbessern, kann diese zusätzliche Inhaltsstoffe enthalten, vorzugsweise ausgewählt aus der Gruppe bestehend aus Farbstoffen, Perlglanzmitteln, Hautpflegenden Verbindungen, Bitterstoffen und Mischungen daraus.

Um den ästhetischen Eindruck der Zusammensetzung zu verbessern, kann sie mit geeigneten Farbstoffen eingefärbt werden. Bevorzugte Farbstoffe, deren Auswahl dem Fachmann keinerlei Schwierigkeit bereitet, sollten eine hohe Lagerstabilität und Unempfindlichkeit gegenüber den übrigen Inhaltsstoffen der Wasch- oder Reinigungsmittel und gegen Licht sowie keine ausgeprägte Substantivität gegenüber Textilfasern aufweisen, um diese nicht anzufärben.

Die Zusammensetzung kann zur Erhöhung des Glanzes auch ein Perlglanzmittel enthalten. Beispiele für geeignete Perlglanzmittel sind Ethylenglykolmono- und -distearat sowie PEG-3-distearat.

Weiterhin kann die Zusammensetzung eine hautpflegende Verbindung umfassen.

Unter einer hautpflegenden Verbindung wird eine Verbindung oder eine Mischung aus Verbindungen verstanden, die bei Kontakt eines Textils mit dem Waschmittel auf das Textil aufziehen und bei Kontakt des Textils mit Haut der Haut einen Vorteil verleihen verglichen mit einem Textil, welche nicht mit der erfindungsgemäßen Zusammensetzung behandelt wurde. Dieser Vorteil kann beispielsweise den Transfer der hautpflegenden Verbindung vom Textil auf die Haut, einen geringeren Wassertransfer von der Haut auf das Textil oder eine geringere Reibung auf der Hautoberfläche durch das Textil umfassen.

Die hautpflegende Verbindung ist vorzugsweise hydrophob, kann flüssig oder fest sein und muss kompatibel mit den anderen Inhaltsstoffen der festen, Textil-pflegenden Zusammensetzung sein. Die hautpflegende Verbindung kann beispielsweise
a) Wachse wie Carnauba, Spermaceti, Bienenwachs, Lanolin, Derivate davon sowie Mischungen daraus;
b) Pflanzenextrakte, zum Beispiel pflanzliche Öle wie Avokadoöl, Olivenöl, Palmöl, Palmenkernöl, Rapsöl, Leinöl, Sojaöl, Erdnussöl, Korianderöl, Ricinusöl, Mohnöl, Kakaoöl, Kokosnussöl, Kürbiskernöl, Weizenkeimöl, Sesamöl, Sonnenblumenöl, Mandelöl, Macadamianussöl, Aprikosenkernöl, Haselnussöl, Jojobaöl oder Canolaöl, Kamille, Aloe Vera sowie Mischungen daraus;
c) höhere Fettsäuren wie Laurinsäure, Myristinsäure, Palmitinsäure, Stearinsäure, Behensäure, Ölsäure, Linolsäure, Linolensäure, Isostearinsäure oder mehrfach ungesättigte Fettsäuren;
d) höhere Fettalkohole wie Laurylalkohol, Cetylalkohol, Stearylalkohol, Oleylalkohol, Behenylalkohol oder 2-Hexadecanol,
e) Ester wie Cetyloctanoat, Lauryllactat, Myristyllactat, Cetyllactat, Isopropylmyristat, Myristylmyristat, Isopropylpalmitat, Isopropyladipat, Butylstearat, Decyloleat, Cholesterolisostearat, Glycerolmonostearat, Glyceroldistearat, Glyceroltristearat, Alkyllactat, Alkylcitrat oder Alkyltartrat;
f) Kohlenwasserstoffe wie Paraffine, Mineralöle, Squalan oder Squalen;
g) Lipide;
h) Vitamine wie Vitamin A, C oder E oder Vitaminalkylester;
i) Phospholipide;
j) Sonnenschutzmittel wie Octylmethoxylcinnamat und Butylmethoxybenzoylmethan;
k) Silikonöle wie lineare oder cyclische Polydimethylsiloxane, Amino-, Alkyl-, Alkylaryl- oder Arylsubstituierte Silikonöle und
l) Mischungen daraus
umfassen.

Die Menge an hautpflegender Verbindung beträgt vorzugsweise zwischen 0,01 und 10 Gew.-%, vorzugsweise zwischen 0,1 und 5 Gew.-% und ganz besonders bevorzugt zwischen 0,3 und 3 Gew.-% bezogen auf die feste Zusammensetzung. Es kann sein, dass die Haut-pflegende Verbindung zusätzlich auch einen Textil-pflegenden Effekt besitzt.

Um eine orale Aufnahme der Zusammensetzung durch Menschen, insbesondere Kinder, oder Tiere zu verhindern, kann diese einen Bitterstoff wie Bitrex^{®} enthalten.

Beispielrezepturen geeigneter Zusammensetzungen umfassen die folgenden Inhaltsstoffe:
0,01 bis 20, insbesondere 0,1 bis 20 Gew.-% Duftstoffkapseln
0,00 bis <1 Gew.-% Farbstoff(e)
0,1 bis 50 Gew.-% eines Feststoffes, wobei die genaue Einsatzkonzentration, wie hierin definiert, von der mittleren Partikelgröße (d50) des Feststoffes abhängt,
ad 100 Gew.-% Polyethylenglykol mit 4000 bis 12.000 g/mol.

Bei der Zusammensetzung gemäß der vorliegenden Erfindung handelt es sich um eine feste, partikuläre Zusammensetzung. Die einzelnen Partikel der Zusammensetzung können dabei als Schmelzkörper bezeichnet werden, die bei Raumtemperatur und Temperaturen bis 30°C, vorzugsweise bis 40°C fest sind.

Ein Verfahren zur Herstellung derartiger Schmelzkörper kann die folgenden Schritte umfassen:
(a) kontinuierliches Erzeugen und Fördern einer Schmelze umfassend das mindestens eine wasserlösliche oder wasserdispergierbare Trägerpolymer;
(b) kontinuierliches Zudosieren des mindestens einen Duftstoffs zu der Schmelze umfassend das mindestens eine wasserlösliche oder wasserdispergierbare Trägerpolymer;
(c) Mischen der Schmelze umfassend das mindestens eine wasserlösliche oder wasserdispergierbare Trägerpolymer und des mindestens einen Duftstoffs; und
(d) Abkühlen und optional Umformen der Mischung um parfümhaltige Schmelzkörper zu erhalten.

Die Schmelzkörper/Duftpastillen, die mittels des hierin beschriebenen Verfahrens hergestellt werden, können jede beliebige Form haben. Die Formgebung erfolgt insbesondere in Schritt (d) des beschriebenen Verfahrens. Bevorzugt sind feste, partikuläre Formen, wie beispielsweise im Wesentlichen sphärische, figürliche, schuppen-, quader-, zylinder-, kegel- oder nadelförmige Partikel. Beispielsweise können die Partikel eine Gummibärchen-artige, figürliche Ausgestaltung haben. Generell beträgt die maximale Ausdehnung der Partikel in einer räumlichen Dimension vorzugsweise von 0,5 bis 10 mm, insbesondere 0,8 bis 7 mm und besonders bevorzugt 1 bis 3 mm. Das bedeutet, dass, beispielsweise im Falle von sphärischen Partikeln, der Durchmesser der Partikel von 0,5 bis 10 mm, insbesondere 0,8 bis 7 mm und besonders bevorzugt 1 bis 3 mm beträgt. Üblicherweise liegt das Gewicht der einzelnen Partikel zwischen 2 bis 150 mg, vorzugsweise zwischen 5 bis 10 mg, und das Volumen im Bereich von 0,1 bis 1000mm³, vorzugsweise 0,5 bis 100mm³, noch bevorzugter 1 bis 50 mm³.

In verschiedenen Ausführungsformen erfolgt das Erzeugen einer Schmelze, das Schmelzen, in Schritt (a) der hierin beschriebenen Verfahren durch Erwärmen auf eine Temperatur, die nicht mehr als 20°C über dem Schmelzpunkt des Trägerpolymers liegt. Das Schmelzen kann mit allen üblichen und dem Fachmann bekannten Verfahren und Vorrichtungen erfolgen. Die Schmelze, die das mindestens eine Trägerpolymer enthält, wird beispielsweise kontinuierlich erzeugt, indem das mindestens eine Trägerpolymer und ggf. weitere Bestandteile des Schmelzkörpers, wie beispielsweise der mindestens eine Feststoff, kontinuierlich einer entsprechenden Vorrichtung zugeführt werden, in welcher sie erwärmt und die so erzeugte Schmelze weitergefördert, beispielsweise gepumpt wird. Die Schmelze kann aber auch separat, beispielsweise in einem Batch-Verfahren, hergestellt werden. Erfindungsgemäß sind auch solche Ausführungsformen umfasst, bei denen die Bestandteile der Schmelze zu einem beliebigen Zeitpunkt vor Durchführung des erfindungsgemäßen Verfahrens miteinander vermischt werden und die Mischung bis zur Durchführung des Verfahrens in geschmolzener oder in abgekühlter fester Form gelagert wird.

In einem nächsten Schritt wird dann der mindestens eine Duftstoff kontinuierlich zu der Schmelze zudosiert. Dazu wird der mindestens eine Duftstoff vorzugsweise in flüssiger Form eingesetzt, beispielsweise als Parfümöl, Lösung in einem geeigneten Lösungsmittel oder als Aufschlämmung von Parfümkapseln in einem, typischerweise wasser-haltigen, Lösungsmittel. "Flüssig" wie in diesem Zusammenhang verwendet, bedeutet unter den Einsatzbedingungen flüssig, vorzugsweise bei 20°C flüssig.

Bei der Herstellung kann der Durchfluss optional mittels Durchflussmengenmessung der einzelnen Dosierströme, d.h. der Schmelze, des Duftstoffstroms und ggf. weitere Inhaltsstoffströme gesteuert werden. Hierüber lassen sich beispielsweise auch die Mengenverhältnisse der einzelnen Bestandteile einstellen. Die Inhaltstoffe neben dem Trägerpolymer(en) und den Duftstoffen können entweder direkt mit dem Trägerpolyer zusammen als Schmelze erzeugt werden, mit den Duftstoffen zusammen oder separat zu der Schmelze zudosiert werden. Bei letzterer Alternative kann die Zudosierung vor oder nach Zudosierung der Duftstoffe erfolgen.

In einigen Ausführungsformen ist das erfindungsgemäße Verfahren dadurch gekennzeichnet, dass der mindestens eine Feststoff und/oder die mindestens eine Textil-pflegende Verbindung und/oder die zusätzlichen Inhaltsstoffe (A) zu der in Schritt (a) erzeugt und geförderten Schmelze zudosiert werden und/oder (B) bereits in der in Schritt (a) erzeugt und geförderten Schmelze enthalten sind.

Dabei kann das erfindungsgemäße Verfahren dadurch gekennzeichnet sein, dass der mindestens eine Feststoff, die mindestens eine Textil-pflegende Verbindung und/oder die zusätzlichen Inhaltsstoffe (A) zu der in Schritt (a) erzeugt und geförderten, Schmelze zudosiert werden und/oder (B) in der in Schritt (a) erzeugt und geförderten, Schmelze enthalten sind.

Das Mischen der vereinigten Dosierströme kann dann jeweils direkt nach dem Zudosieren oder stromabwärts nach Zudosierung mehrerer oder aller Inhaltsstoffe mit geeigneten Mischern, wie üblichen statischen oder dynamischen Mischaggregaten erfolgen.

Nach dem Mischen wird die Schmelze, die die Duft- und Feststoffe und ggf. weitere Inhaltsstoffe sowie das Trägerpolymer enthält abgekühlt und optional der Umformung zugeführt, wo die Schmelze erstarrt und ihre endgültige Form erhält. Geeignete Verfahren zur Formgebung sind dem Fachmann bekannt. Übliche Formen wurden bereits oben beschrieben.

Die Erfindung betrifft auch die mittels der hierin beschriebenen Verfahren erhältlichen Schmelzkörper sowie deren Verwendung als Textilpflegemittel, vorzugsweise Beduftungsmittel und/oder Weichspüler, zum Beduften und/oder Konditionieren von textilen Flächengebilden. Die Schmelzkörper können dabei ein Textilbehandlungsmittel, wie beispielsweise ein Weichspüler oder ein Teil eines solchen Mittels sein.

Ferner betrifft die Erfindung ein Wasch- oder Reinigungsmittel, umfassend die erfindungsgemäß hergestellten Schmelzkörper.

Durch das Einbringen der erfindungsgemäß hergestellten parfümhaltigen Schmelzkörper in ein Wasch- oder Reinigungsmittel steht dem Verbraucher ein Textil-pflegendes Wasch- oder Reinigungsmittel ("2in1"-Wasch- oder Reinigungsmittel) zur Verfügung und er braucht nicht zwei Mittel zu dosieren sowie keinen separaten Spülgang. Da die erfindungsgemäß hergestellten Zusammensetzungen parfümiert sind, muss nicht auch das Wasch- oder Reinigungsmittel parfümiert werden. Dies führt nicht nur zu geringeren Kosten, sondern ist auch für Verbraucher mit empfindlicher Haut und/oder Allergien vorteilhaft.

Die hierin beschriebenen Schmelzkörper-Zusammensetzungen eignen sich insbesondere zum Konditionieren von textilen Flächengebilden und werden dazu zusammen mit einem herkömmlichen Wasch- oder Reinigungsmittel im (Haupt)Waschgang eines herkömmlichen Wasch- und Reinigungsprozesses mit den textilen Flächengebilden in Kontakt gebracht.

Ist die erfindungsgemäße Schmelzkörper-Zusammensetzung Teil eines Wasch- oder Reinigungsmittels, kann ein festes Wasch- oder Reinigungsmittel vorzugsweise mit 1 bis 20 Gew.-%, insbesondere mit 5 bis 15 Gew.-%, der erfindungsgemäßen Zusammensetzung gemischt werden.

Die im Zusammenhang mit den erfindungsgemäßen Verfahren beschriebenen bevorzugten Ausführungsformen sind ebenfalls auf die Schmelzkörper als solche, die diese enthaltenden Wasch- und Reinigungsmittel sowie die hierin beschriebenen Verwendungen übertragbar und umgekehrt.

### Beispiele

### Beispiel 1: Ausgewählt Feststoffe, dazugehörige Partikelgrößen, typische Einsatzkonzentrationen sowie das jeweilige Verhältnis d50/EK

| **Feststoff** | **d10 [µm]** | **d50 [µm]** | **d90 [µm]** | **Einsatzkonzentration (EK) [Gew.-%]** | **d50/EK** |
|---|---|---|---|---|---|
| **Hydrophile, pyrogene Kieselsäure (Aerosil 200)** | 14 | 41,9 | 678,8 | 2 | 21 |
| **Synthetische, amorphe Kieselsäure (Sipernat 22 S)** | 9,8 | 90 | 773 | 8 | 12 |
| **Natriumsulfat** | 50,9 | 190,8 | 404 | 15 | 13 |
| **Bentonit (Laundrosil)** | 9,1 | 18,3 | 37,8 | 1 | 18 |

Alle eingesetzten Feststoffe führten in den angegebenen Konzentrationen zu sedimentationsstabilen Schmelzen. Die Beispiele mit Natriumsulfat und Bentonit (Laundrosil) sind nicht erfindungsgemäß.

## Patentansprüche

1. Feste, partikuläre Zusammensetzung umfassend
(a) mindestens ein wasserlösliches Trägerpolymer ausgewählt aus Polyethylenglykol in einer Menge von 30 bis 95 Gew.-%, wobei das Polyethylenglykol ein mittleres Molekulargewicht von 4.000 bis 12.000 und einem Schmelzpunkt im Bereich von 50 bis 65°C aufweist;
(b) mindestens einen Duftstoff in Form von Duftstoffkapseln, und
(c) mindestens einen Feststoff ausgewählt aus Kieselsäuren mit einem d50-Wert im Bereich von 2 bis 500 µm,
wobei der mindestens eine Feststoff in einer Menge eingesetzt wird, dass das Verhältnis des d50-Wertes der Feststoffpartikel in µm zu dem Wert der Einsatzkonzentration in Gew.- %, bezogen auf das Gesamtgewicht der Zusammensetzung, im Bereich von 5 bis 30 liegt.

2. Die Zusammensetzung nach Anspruch 1, **dadurch gekennzeichnet, dass** das Verhältnis des d50-Wertes zu dem Wert der Einsatzkonzentration innerhalb des Bereichs von 8 bis 27 liegt.

3. Die Zusammensetzung nach Anspruch 1, **dadurch gekennzeichnet, dass** der mindestens eine Feststoff ausgewählt ist aus pyrogenen Kieselsäuren und/oder Fällungskieselsäuren.

4. Zusammensetzung nach einem der voranstehenden Ansprüche, **dadurch gekennzeichnet, dass** der mindestens eine Duftstoff
(A) in einer Menge von 0,1 bis 20 Gew.-% in der Zusammensetzung enthalten ist.

5. Zusammensetzung nach einem der voranstehenden Ansprüche, **dadurch gekennzeichnet, dass** die Zusammensetzung ferner mindestens eine Textil-pflegende Verbindung enthält, wobei diese vorzugsweise ausgewählt wird aus Textil-weichmachenden Verbindungen, Silikonölen, Antiredepositionsmitteln, optischen Aufhellern, Vergrauungsinhibitoren, Einlaufverhinderern, Knitterschutzmitteln, Farbübertragungsinhibitoren, antimikrobiellen Wirkstoffen, Germiziden, Fungiziden, Antioxidantien, Antistatika, Bügelhilfsmitteln, Phobier- und Imprägniermitteln, Quell- und Schiebefestmitteln, UV-Absorber sowie Mischungen daraus ausgewählt ist.

6. Zusammensetzung nach einem der voranstehenden Ansprüche, **dadurch gekennzeichnet, dass** die Textil-pflegende Verbindung eine Textil-weichmachende Verbindung ist, vorzugsweise ausgewählt aus Polysiloxanen, Textil-weichmachenden Tonen, kationischen Polymeren und Mischungen daraus.

7. Zusammensetzung nach einem der voranstehenden Ansprüche, **dadurch gekennzeichnet, dass** die Zusammensetzung zusätzliche Inhaltsstoffe enthält, vorzugsweise ausgewählt aus der Gruppe bestehend aus Farbstoffen, Perlglanzmitteln, hautpflegenden Verbindungen, Bitterstoffen und Mischungen daraus.

8. Verwendung der festen Zusammensetzung gemäß einem der Ansprüche 1 bis 7 als Textilpflegemittel, vorzugsweise Beduftungsmittel und/oder Weichspüler, zum Beduften und/oder Konditionieren von textilen Flächengebilden.

9. Wasch- oder Reinigungsmittel, umfassend eine feste Zusammensetzung gemäß einem der Ansprüche 1 bis 7.

## Claims

1. Solid particulate composition comprising
(a) at least one water-soluble carrier polymer-selected from polyethylene glycol in an amount of 30 to 95% by weight, said polyethylene glycol having an average molecular weight of 4,000 to 12,000 and a melting point in the range of 50 to 65°C;
(b) at least one fragrance in the form of fragrance capsules, and
(c) at least one solid selected from silica having a d50 value in the range of 2 to 500 µm ,
wherein the at least one solid is used in an amount such that the ratio of the d50 value of the solid particles in µm to the value of the feed concentration in weight percent, based on the total weight of the composition, is in the range of 5 to 30.

2. Composition according to claim 1, **characterized in that** the ratio of the d50 value to the feed concentration value is within the range of 8 to 27.

3. Composition according to claim 1, **characterized in that** the at least one solid is selected from fumed silicas and/or precipitated silicas.

4. Composition according to any one of the preceding claims, **characterized in that** the at least one perfuming agent is
(A) is present in the composition in an amount of from 0.1 to 20% by weight.

5. Composition according to any one of the preceding claims, **characterized in that** the composition further comprises at least one fabric conditioning compound, preferably selected from fabric softening compounds, silicone oils, anti-redeposition agents, optical brighteners, graying inhibitors, shrinkage inhibitors, wrinkle inhibitors, dye transfer inhibitors, antimicrobial agents, germicides, fungicides, antioxidants, antistatic agents, ironing aids, phobizing and impregnating agents, swelling and slip agents, UV absorbers, and mixtures thereof.

6. Composition according to any one of the preceding claims, **characterized in that** the fabric conditioning compound is a fabric softening compound, preferably selected from polysiloxanes, fabric softening clays, cationic polymers and mixtures thereof.

7. Composition according to any one of the preceding claims, **characterized in that** the composition contains additional ingredients, preferably selected from the group consisting of colorants, pearlescent agents, skin conditioning compounds, bittering agents and mixtures thereof.

8. Use of the solid composition according to any one of claims 1 to 7 as a textile care agent, preferably fragrancing agent and/or fabric softener, for fragrancing and/or conditioning textile fabrics.

9. A detergent or cleaning composition comprising a solid composition according to any one of claims 1 to 7.

## Revendications

1. Composition particulaire solide comprenant
(a) au moins un polymère support soluble dans l'eau choisi parmi le polyéthylèneglycol en une quantité de 30 à 95 % en poids, le polyéthylèneglycol ayant un poids moléculaire moyen de 4 000 à 12 000 et un point de fusion dans la plage de 50 à 65°C ;
(b) au moins un parfum sous forme de capsules de parfum, et
(c) au moins un solide choisi parmi les silices ayant une valeur d50 dans la gamme de 2 à 500 µm ,
dans laquelle ledit au moins un solide est utilisé en une quantité telle que le rapport de la valeur d50 des particules solides en µm à la valeur de la concentration d'utilisation en % en poids, sur la base du poids total de la composition, se situe dans la plage de 5 à 30.

2. Composition selon la revendication 1, **caractérisée en ce que** le rapport entre la valeur de d50 et la valeur de la concentration d'utilisation est compris dans la plage de 8 à 27.

3. Composition selon la revendication 1, **caractérisée en ce que** ledit au moins un solide est choisi parmi les silices pyrogénées et/ou les silices de précipitation.

4. Composition selon l'une quelconque des revendications précédentes, **caractérisée en ce que** le au moins un parfum
(A) est contenu dans la composition en une quantité de 0,1 à 20 % en poids.

5. Composition selon l'une quelconque des revendications précédentes, **caractérisée en ce que** la composition comprend en outre au moins un composé d'entretien des textiles, de préférence choisi parmi les composés adoucissants pour textiles, les huiles de silicone, les agents antidéposition, les azurants optiques, inhibiteurs de grisaillement, inhibiteurs de rétrécissement, agents anti-froissement, inhibiteurs de transfert de couleur, agents antimicrobiens, germicides, fongicides, antioxydants, antistatiques, auxiliaires de repassage, agents de phobage et d'imprégnation, agents de fixation de gonflement et de glissement, absorbeurs d'UV, et leurs mélanges.

6. Composition selon l'une quelconque des revendications précédentes, **caractérisée en ce que** le composé d'entretien des textiles est un composé adoucissant pour les textiles, de préférence choisi parmi les polysiloxanes, les argiles adoucissantes pour les textiles, les polymères cationiques et leurs mélanges.

7. Composition selon l'une quelconque des revendications précédentes, **caractérisée en ce que** la composition contient des ingrédients supplémentaires, de préférence choisis dans le groupe constitué par les colorants, les agents nacrants, les composés de soin de la peau, les substances amères et leurs mélanges.

8. Utilisation de la composition solide selon l'une quelconque des revendications 1 à 7 comme agent d'entretien des textiles, de préférence comme agent de parfumage et/ou d'assouplissement, pour parfumer et/ou conditionner des produits textiles de surface.

9. Produit de lavage ou de nettoyage comprenant une composition solide selon l'une quelconque des revendications 1 à 7.
